(19) Europäisches Patentamt
European Patent Office
Office européen des brevets

(11) **EP 4 376 521 A1**

(12) **EUROPEAN PATENT APPLICATION**
published in accordance with Art. 153(4) EPC

(43) Date of publication:
**29.05.2024 Bulletin 2024/22**

(21) Application number: **21950959.3**

(22) Date of filing: **21.07.2021**

(51) International Patent Classification (IPC):
**H04W 72/04** (2023.01)

(52) Cooperative Patent Classification (CPC):
**H04W 72/04**

(86) International application number:
**PCT/JP2021/027341**

(87) International publication number:
**WO 2023/002609 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **MATSUMURA, Yuki**
**Tokyo 100-6150 (JP)**

• **NAGATA, Satoshi**
**Tokyo 100-6150 (JP)**
• **SUN, Weiqi**
**Beijing 100190 (CN)**
• **WANG, Jing**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes: a receiving section that receives information indicating that a plurality of transport blocks are scheduled for a physical uplink shared channel by single downlink control information; and a control section that performs, when the physical uplink shared channel overlaps a physical uplink control channel for transmitting uplink control information, control to multiplex the uplink control information on at least one of the plurality of transport blocks. According to one aspect of the present disclosure, it is possible to appropriately perform PUSCH transmission.

FIG. 4A

**(Cont. next page)**

## FIG. 4B

FREQUENCY

UCI    TB0

TIME

UE

PUSCH(1,2,...,k)
CW0/TB0

PUSCH(k+1,...,L)
CW1/TB1

FREQUENCY

TB1

TIME

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as 5th generation mobile communication system (5G), 5G+ (plus), 6th generation mobile communication system (6G), New Radio (NR), 3GPP Rel. 15 (or later versions), and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, Rel-18 NR), it is studied that a user terminal (User Equipment (UE)) transmits a plurality of codewords (Code Words (CWs)) by using an uplink shared channel (Physical Uplink Shared Channel (PUSCH)). However, sufficient study about details of this operation has not advanced. For example, it is not sufficiently studied how to control, when a plurality of CWs are transmitted using PUSCHs, generation, layer mapping, precoding, and the like, of the CWs. Unless PUSCH transmission for the plurality of CWs is not appropriately performed, throughput may decrease, and communication quality may deteriorate.

Thus, an object of the present disclosure is to provide a terminal, a radio communication method, and a base station with which PUSCH transmission is appropriately performed.

Solution to Problem

A terminal according to one aspect of the present disclosure includes: a receiving section that receives information indicating that a plurality of transport blocks are scheduled for a physical uplink shared channel by single downlink control information; and a control section that performs, when the physical uplink shared channel overlaps a physical uplink control channel for transmitting uplink control information, control to multiplex the uplink control information on at least one of the plurality of transport blocks.

Advantageous Effects of Invention

According to one aspect of the present disclosure, it is possible to appropriately perform PUSCH transmission.

Brief Description of Drawings

[FIG. 1] FIG. 1 is a diagram to show an example of associations between a precoder type and a TPMI index.
[FIG. 2] FIGS. 2A to 2C are diagrams to show examples of PUSCH transmission using a plurality of panels.
[FIG. 3] FIGS. 3A to 3C are diagrams to show examples of schemes 1 to 3 of simultaneous UL transmission using a plurality of panels.

[FIG. 4] FIGS. 4A and 4B are diagrams to show examples of multiplexing of UCI and a PUSCH(s) according to a first embodiment.

[FIG. 5] FIG. 5 shows correspondences of codeword-to-layer mapping for spatial multiplexing defined in Rel-15/16 NR.

[FIG. 6] FIGS. 6A and 6B are examples of correspondences between a precoding information and number of layers field value and the number of layers and a TPMI.

[FIG. 7] FIG. 7 is a diagram to show an example of precoding according to Embodiment 4.1.

[FIG. 8] FIG. 8 is a diagram to show an example of precoding according to Embodiment 4.2.

[FIG. 9] FIG. 9 is a diagram to show an example of precoding according to Embodiment 4.3.

[FIG. 10] FIG. 10 is a diagram to show an example of precoding according to Embodiment 4.4.

[FIG. 11] FIG. 11 is a diagram to show an example of a schematic structure of a radio communication system according to one embodiment.

[FIG. 12] FIG. 12 is a diagram to show an example of a structure of a base station according to one embodiment.

[FIG. 13] FIG. 13 is a diagram to show an example of a structure of a user terminal according to one embodiment.

[FIG. 14] FIG. 14 is a diagram to show an example of a hardware structure of the base station and the user terminal according to one embodiment.

Description of Embodiments

(Repetition Transmission)

In Rel. 15, repetition transmission is supported in data transmission. For example, a base station (network (NW), gNB) may repeat transmission of DL data (for example, a downlink shared channel (PDSCH)) certain times. Alternatively, a UE may repeat UL data (for example, an uplink shared channel (PUSCH)) certain times.

The UE may be scheduled with PUSCH transmission to be repeated certain times, by single DCI. The number of repetitions is also referred to as a repetition factor K or an aggregation factor K.

The n-th repetition is also referred to as the n-th transmission occasion and the like and may be identified by a repetition index k ($0 \le k \le K - 1$). Repetition transmission may be applied to a PUSCH dynamically scheduled by DCI (for example, a dynamic grant based PUSCH) or may be applied to a configured grant based PUSCH.

The UE semi-statically receives information indicating the repetition factor K (for example, aggregationFactorUL or aggregationFactorDL) by higher layer signaling. Here, the higher layer signaling may be, for example, any one or combinations of RRC (Radio Resource Control) signaling, MAC (Medium Access Control) signaling, broadcast information, and the like.

For example, the MAC signaling may use MAC control elements (MAC CEs), MAC PDUs (Protocol Data Units), and the like. The broadcast information may be, for example, a master information block (MIB), a system information block (SIB), minimum system information (Remaining Minimum System Information (RMSI)), or the like.

The UE controls reception processing (for example, at least one of reception, demapping, demodulation, and decoding) of a PDSCH or transmission processing (for example, at least one of transmission, mapping, modulation, and coding) of a PUSCH in K consecutive slots, based on at least one of the following field values (or pieces of information indicated by the field values) in DCI:

- allocation of a time domain resource (for example, a start symbol, the number of symbols in each slot, and the like),
- allocation of a frequency domain resource (for example, a certain number of resource blocks (RBs), a certain number of resource block groups (RBGs)),
- modulation and coding scheme (MCS) index,
- configuration of a demodulation reference signal (DMRS) for the PUSCH, and
- spatial relation information (spatial relation info) or a transmission configuration indication (or transmission configuration indicator) (TCI) state (TCI-state) of the PUSCH.

The same symbol allocation may be applied among the K consecutive slots. The UE may determine symbol allocation in each slot, based on a start symbol S and the number L of symbols (for example, Start and Length Indicator (SLIV)) determined based on a value m of a certain field (for example, a time domain resource allocation (TDRA) field) in the DCI. Note that the UE may determine the first slot, based on K2 information determined based on the value m of the certain field (for example, the TDRA field) in the DCI.

Meanwhile, redundancy versions (RVs) applied to TBs based on the same data may be the same or at least partially different from each other among the K consecutive slots. For example, an RV to be applied to the TB in the n-th slot (transmission occasion, repetition) may be determined based on a certain field (for example, an RV field) in the DCI.

In Rel. 15, a PUSCH may be repeatedly transmitted over a plurality of slots (in slot units). In Rel. 16 or later versions, it is supported to repeatedly transmit a PUSCH in a unit shorter than a slot (for example, sub-slot units, mini-slot units, or units of a certain number of symbols).

The UE may determine symbol allocation for PUSCH transmission in a certain slot (for example, PUSCH with k = 0), based on the start symbol S and the number L of symbols determined based on the value m of the certain field (for example, the TDRA field) in the DCI for the PUSCH. Note that the UE may determine a certain slot, based on Ks information determined based on the value m of the certain field (for example, the TDRA field) in the DCI.

The UE may dynamically receive information indicating the repetition factor K (for example, numberofrepetitions) by downlink control information. The repetition factor may be determined based on the value m of the certain field (for example, the TDRA field) in the DCI. For example, a table in which correspondences of a bit value notified by the DCI, the repetition factor K, the start symbol S, and the number L of symbols are defined may be supported.

Slot-based repetition transmission may be referred to as repetition transmission type A (for example, PUSCH repetition Type A), and sub-slot-based repetition transmission may be referred to as repetition transmission type B (for example, PUSCH repetition Type B).

The UE may be configured with application of at least one of repetition transmission type A and repetition transmission type B. For example, the UE may be notified of a repetition transmission type to apply, by the UE through higher layer signaling (for example, PUSCHRepTypeIndicator) from the base station.

The UE may be configured with at least one of repetition transmission type A and repetition transmission type B for each DCI format for scheduling a PUSCH.

For example, when higher layer signaling for a first DCI format (for example, DCI format 0_1) (for example, PUSCHRepTypeIndicator-AorDCIFormat0_1) is configured at repetition transmission type B (for example, PUSCH-RepTypeB), the UE applies repetition transmission type B for PUSCH repetition transmission scheduled by the first DCI format. In other cases (for example, a case where PUSCH-RepTypeB is not configured or a case where PUSCH-RepTypA is configured), the UE applies repetition transmission type A for PUSCH repetition transmission scheduled by the first DCI format.

(PUSCH Precoder)

For NR, it is studied that a UE supports at least one of codebook (CB) based transmission and non-codebook (NCB) based transmission.

For example, it is studied that the UE judges a precoder (precoding matrix) for at least one of CB based and NCB based uplink shared channel (Physical Uplink Shared Channel (PUSCH)) transmissions by using at least a reference signal for measurement (Sounding Reference Signal (SRS)) resource indicator (SRS Resource Indicator (SRI)).

In a case of CB based transmission, the UE may determine a precoder for the PUSCH transmission, based on an SRI, a transmitted rank indicator (TRI), a transmitted precoding matrix indicator (TPMI), and the like. In a case of NCB based transmission, the UE may determine a precoder for the PUSCH transmission, based on the SRI.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH. The TRI and the TPMI may be specified by precoding information and number of layers field ("Precoding information and number of layers" field) of the DCI. The precoding information and number of layers field is also referred to as a precoding information field for simplicity.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence") .

In the present disclosure, higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of a PMI specified by the TPMI, by codebookSubset.

Note that the precoder type may be specified by any of or a combination of at least two of full coherent (fully coherent, coherent), partial coherent, and non-coherent (non coherent) (which may be indicated, for example, by a parameter such as "fullyAndPartialAndNonCoherent" or "partialAndNonCoherent."

Full coherent may mean that all the antenna ports to be used for transmission are synchronized (which may be expressed as being able to be matched in terms of phase, being able to be phase controlled for each coherent antenna port, being able to appropriately apply a precoder for each coherent antenna port, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

The precoder type may be interpreted as coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

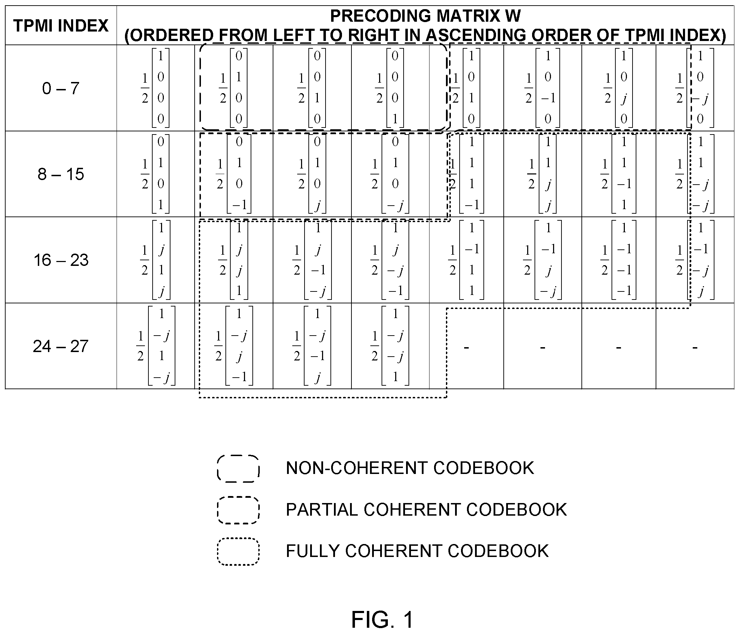

FIG. 1 is a diagram to show an example of associations between a precoder type and a TPMI index. FIG. 1 corresponds to a table of a precoding matrix W for single-layer (rank 1) transmission using four antenna ports by DFT-s-OFDM (Discrete Fourier Transform spread OFDM) (for which transform precoding is enabled).

In FIG. 1, in a case where the precoder type (codebookSubset) is fully and partial and non-coherent (fullyAndPartialAndNonCoherent), the UE is notified of any TPMI among 0 to 27 for single-layer transmission. In a case where the precoder type is partial and non-coherent (partialAndNonCoherent), the UE is configured with any TPMI among 0 to 11 for single-layer transmission. In a case where the precoder type is non-coherent (nonCoherent), the UE is configured with any TPMI among 0 to 3 for single-layer transmission.

Note that, as shown in FIG. 1, a precoding matrix with only one element of each column not being 0 may be referred to as a non-coherent codebook. A precoding matrix with a certain number of (but not all) elements of each column not being 0 may be referred to as a partial coherent codebook. A precoding matrix with all the elements of each column not being 0 may be referred to as a fully coherent codebook.

The non-coherent codebook and the partial coherent codebook may be referred to as antenna selection precoders. The fully coherent codebook may be referred to as a non-antenna selection precoder.

Note that, in the present disclosure, the partial coherent codebook may correspond to codebooks (precoding matrices) each corresponding to a TPMI with which the UE configured with a partial coherent codebook subset (for example, an RRC parameter "codebookSubset" = "partialAndNonCoherent") is specified by DCI for codebook based transmission, excluding codebooks each corresponding to a TPMI with which the UE configured with a non-coherent codebook subset (for example, an RRC parameter "codebookSubset" = "nonCoherent") is specified (in other words, in a case of single-layer transmission with four antenna ports, codebooks with TPMI = 4 to 11).

Note that, in the present disclosure, the fully coherent codebook may correspond to codebooks (precoding matrices) each corresponding to a TPMI with which the UE configured with a fully coherent codebook subset (for example, an RRC parameter "codebookSubset" = "fullyAndPartialAndNonCoherent") is specified by DCI for codebook based transmission, excluding codebooks each corresponding to a TPMI with which the UE configured with a partial coherent codebook subset (for example, an RRC parameter "codebookSubset" = "partialAndNonCoherent") is specified (in other words, in a case of single-layer transmission with four antenna ports, codebooks with TPMI = 12 to 27).

(Spatial Relations for SRS and PUSCH)

The UE may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of periodic SRS (P-SRS), semi-persistent SRS (SP-SRS), and aperiodic SRS (A-SRS, AP-SRS). Note that the UE may transmit a P-SRS and an SP-SRS periodically (or periodically after activation), and transmit an A-SRS, based on an SRS request in DCI.

The usage (RRC parameter "usage," L1 (Layer-1) parameter "SRS-SetUse") may be, for example, beam management (beamManagement), codebook based transmission (codebook (CB)), non-codebook based transmission (nonCodebook (NCB)), antenna switching (antennaSwitching), or the like. An SRS with usage of codebook based transmission or non-codebook based transmission may be used to determine a precoder for codebook based or non-codebook based PUSCH transmission based on an SRI.

For example, in a case of codebook based transmission, the UE may determine a precoder for the PUSCH transmission, based on an SRI, a transmitted rank indicator (TRI), and a transmitted precoding matrix indicator (TPMI). In a case of non-codebook based transmission, the UE may determine a precoder for the PUSCH transmission, based on the SRI.

The SRS resource information may include an SRS resource ID (SRS-ResourceId), the number of SRS ports, SRS port numbers, transmission Comb, SRS resource mapping (for example, the time and/or frequency resource location, a resource offset, resource periodicity, the number of repetitions, the number of SRS symbols, an SRS bandwidth, and the like), hopping related information, an SRS resource type, a sequence ID, spatial relation information of the SRS, and the like.

The spatial relation information of the SRS (for example, an RRC information element "spatialRelationInfo") may indicate spatial relation information between a certain reference signal and the SRS. The certain reference signal may be at least one of a synchronization signal / broadcast channel (Synchronization Signal / Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the certain reference signal.

Note that, in the present disclosure, an SSB index, an SSB resource ID, and an SSBRI (SSB Resource Indicator) may be interchangeably interpreted. A CSI-RS index, a CSI-RS resource ID, and a CRI (CSI-RS Resource Indicator) may be interchangeably interpreted. An SRS index, an SRS resource ID, and an SRI may be interchangeably interpreted.

The spatial relation information of the SRS may include a serving cell index, a BWP index (BWP ID), and the like corresponding to the certain reference signal.

In NR, transmission of an uplink signal may be controlled based on the presence of beam correspondence (BC). BC may be a capability of a certain node (for example, the base station or the UE) to determine a beam (transmit beam, Tx beam) to be used for transmission of a signal, based on a beam (receive beam, Rx beam) used for reception of the signal, for example.

Note that the BC may be referred to as transmit/receive beam correspondence (Tx/Rx beam correspondence), beam reciprocity, beam calibration, calibrated/non-calibrated, reciprocity calibrated/non-calibrated, correspondence degree, matching degree, and the like.

For example, in a case without BC, the UE may use the same beam (spatial domain transmission filter) as that of an SRS (or an SRS resource) indicated by the base station, based on a measurement result of one or more SRSs (or SRS resources), to transmit an uplink signal (for example, a PUSCH, a PUCCH, an SRS, or the like).

In contrast, in a case with BC, the UE may use the same or a corresponding beam (spatial domain transmission filter) as or to that of a beam (spatial domain reception filter) used for reception of a certain SSB or CSI-RS (or CSI-RS resource), to transmit an uplink signal (for example, a PUSCH, a PUCCH, an SRS, or the like).

When the UE is configured with spatial relation information related to an SSB or a CSI-RS and an SRS for a certain SRS resource (for example, in a case with BC), the UE may transmit the SRS resource by using the same spatial domain filter (spatial domain transmission filter) as a spatial domain filter for reception (spatial domain reception filter) of the SSB or CSI-RS. In this case, the UE may assume that the UE receive beam for the SSB or CSI-RS and a UE transmit beam for the SRS may be the same.

When the UE is configured, for a certain SRS (target SRS) resource, with spatial relation information related to another SRS (reference SRS) and the SRS (target SRS) (for example, in a case without BC), the UE may transmit the target SRS resource by using the same spatial domain filter (spatial domain transmission filter) as a spatial domain filter for transmission (spatial domain transmission filter) of the reference SRS. In other words, in this case, the UE may assume that the UE transmit beam for the reference SRS and a UE transmit beam for the target SRS may be the same.

The UE may determine, based on the value of a certain field (for example, an SRS resource indicator (SRI) field) in DCI (for example, DCI format 0_1), a spatial relation of a PUSCH scheduled by the DCI. Specifically, the UE may use spatial relation information (for example, an RRC information element "spatialRelationInfo") of the SRS determined based on the value of the certain field (for example, the SRI), for PUSCH transmission.

In a case of using codebook based transmission for the PUSCH, the UE may be configured with two SRS resources by RRC and indicated with one of the two SRS resources by DCI (certain one-bit field). In a case of using non-codebook based transmission for the PUSCH, the UE may be configured with four SRS resources by RRC and indicated with one of the four SRS resources by DCI (certain two-bit field). To use a spatial relation other than the two or four spatial relations configured by RRC, RRC reconfiguration is needed.

Note that a DL-RS can be configured for a spatial relation of an SRS resource to be used for a PUSCH. For example, for an SP-SRS, the UE can be configured with spatial relations of a plurality of (for example, up to 16) SRS resources by RRC and indicated with one of the plurality of SRS resources by a MAC CE.

(UL TCI State)

For Rel-16 NR, it is studied to use a UL TCI state as a UL beam indication method. Notification of a UL TCI state is similar to notification of a DL beam (DL TCI state) by a UE. Note that a DL TCI state may be interpreted as a TCI state for PDCCH/PDSCH, and vice versa.

A channel/signal (which may be referred to as a target channel/RS) for which a UL TCI state is configured (specified) may be at least one of a PUSCH (DMRS of a PUSCH), a PUCCH (DMRS of a PUCCH), a random access channel (Physical Random Access Channel (PRACH)), an SRS, and the like, for example.

An RS (source RS) to have a QCL relationship with the channel/signal may be a DL RS (for example, an SSB, a CSI-RS, a TRS, or the like) or a UL RS (for example, an SRS, an SRS for beam management, or the like), for example.

An RS to have a QCL relationship with the channel/signal in a UL TCI state may be associated with a panel ID for receiving or transmitting the RS. The association may be explicitly configured (or specified) by higher layer signaling (for example, RRC signaling, a MAC CE, or the like) or may be implicitly judged.

A correspondence between an RS and a panel ID may be configured by being included in UL TCI state information or may be configured by being included in at least one of resource configuration information, spatial relation information, and the like of the RS.

Examples of a QCL type indicated by the UL TCI state may be existing QCL types A to D and other QCL types or may include a certain spatial relation, a related antenna port (port index), and the like.

When the UE is specified with a related panel ID (for example, specified by DCI) for UL transmission, the UE may perform the UL transmission by using a panel corresponding to the panel ID. A panel ID may be associated with a UL TCI state. When the UE is specified (or activated) with a UL TCI state for a certain UL channel/signal, the UE may specify a panel to use for transmission of the UL channel/signal according to the panel ID related to the UL TCI state.

(Transmission Using Plurality of Panels)

<Transmission Schemes>

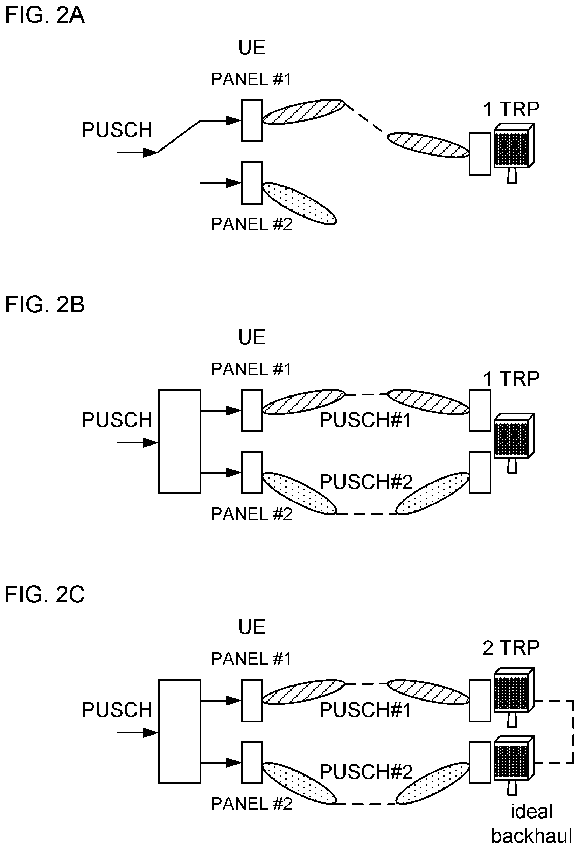

In a case of a UE in Rel. 15 and Rel. 16, only one beam and one panel are used for UL transmission at one time point (FIG. 2A). For Rel. 17 and later versions, simultaneous UL transmission of a plurality of beams and a plurality of panels to one or more TRPs is studied to improve UL throughput and reliability. Although description will be given below of simultaneous PUSCH transmission, similar processing may be performed also for PUCCH.

Reception by one TRP including a plurality of panels (FIG. 2B) or reception by two TRPs having ideal backhaul (FIG. 2C) is studied for simultaneous UL transmission using a plurality of beams and a plurality of panels. A single PDCCH for scheduling a plurality of PUSCHs (for example, simultaneous transmission of PUSCH #1 and PUSCH #2) is studied. It is studied to support panel-specific transmission and introduce panel IDs.

A base station may configure or indicate panel-specific transmission for UL transmission by using UL TCI or a panel ID. The UL TCI (UL TCI state) may be based on signaling similar to DL beam indication supported in Rel. 15. A panel ID may be implicitly or explicitly applied to transmission of at least one of a target RS resource or a target RS resource set, a PUCCH, an SRS, and a PRACH. In a case where the panel ID is explicitly notified, the panel ID may be configured in at least one of a target RS, a target channel, and a reference RS (for example, a DL RS resource configuration or spatial relation information).

A multi-panel UL transmission scheme or a candidate for a multi-panel UL transmission scheme may be at least one of schemes 1 to 3 (multi-panel UL transmission schemes 1 to 3) below. Only one of schemes 1 to 3 may be supported. A plurality of schemes including at least one of schemes 1 to 3 may be supported, and one of the plurality of schemes may be configured for the UE.

<<Scheme 1>>

Coherent Multi-panel UL Transmission

A plurality of panels may be synchronized with each other. All layers are mapped to all the panels. A plurality of analog beams are indicated. An SRS resource indicator (SRI) field may be extended. This scheme may use four layers at maximum for UL.

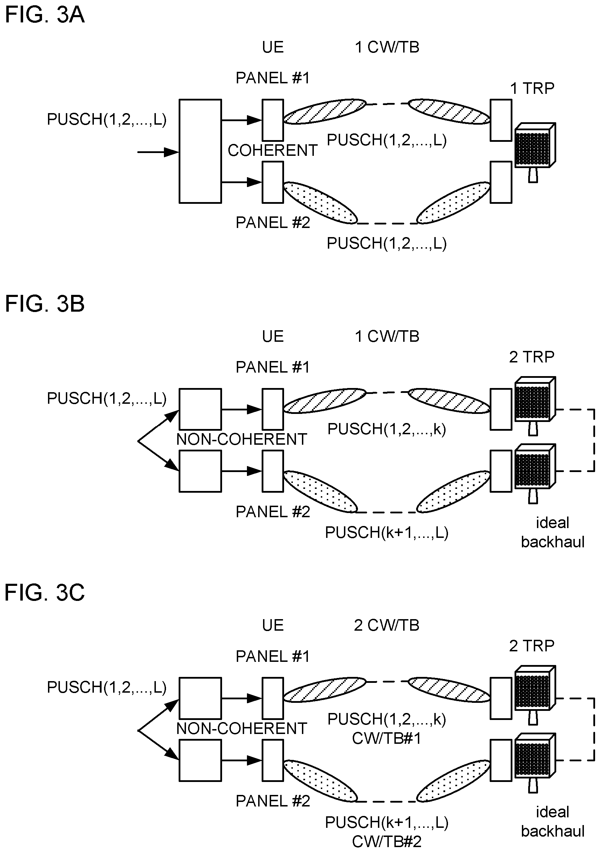

In the example in FIG. 3A, the UE maps one codeword (CW) or one transport block (TB) to L layers (PUSCHs (1, 2, ..., L)) and transmits the L layers from each of the two panels. Panel #1 and panel #2 are coherent. Scheme 1 can obtain gain by diversity. The total number of layers in the two panels is 2L. In a case where the maximum total number of layers is four, the maximum number of layers per panel is two.

<<Scheme 2>>

Non-coherent Multi-panel UL Transmission of One Codeword (CW) or Transport Block (TB)

A plurality of panels need not be synchronized with each other. Different layers are mapped to different panels and one CW or TB for PUSCHs from the plurality of panels. The layers corresponding to the one CW or TB may be mapped to the plurality of panels. This scheme may use four layers or eight layers at maximum for UL. In a case of supporting eight layers at maximum, this scheme may support one CW or TB using eight layers at maximum.

In the example in FIG. 3B, the UE maps one CW or one TB to k layers (PUSCHs (1, 2, ..., k)) and L - k layers (PUSCHs (k + 1, k + 2, ..., L)), and transmits k layers from panel #1 while transmitting L - k layers from panel #2. Scheme 2 can obtain gain by multiplexing and diversity. The total number of layers in the two panels is L.

<<Scheme 3>>

Non-coherent Multi-panel UL Transmission of Two CWs or TBs

A plurality of panels need not be synchronized with each other. Different layers are mapped to different panels and two CWs or TBs for PUSCHs from the plurality of panels. The layers corresponding to one CW or TB may be mapped to one panel. The layers corresponding to a plurality of CWs or TBs may be mapped to different panels. This scheme may use four layers or eight layers at maximum for UL. In a case of supporting eight layers at maximum, this scheme may support four layers at maximum per CW or TB.

In the example in FIG. 3C, the UE maps CW #1 or TB #1 of two CWs or two TBs to k layers (PUSCHs (1, 2, ..., k)) while mapping CW #2 or TB #2 to L - k layers (PUSCHs (k + 1, k + 2, ..., L)), and transmits k layers from panel #1 and transmitting L - k layers from panel #2. Scheme 3 can obtain gain by multiplexing and diversity. The total number of layers in the two panels is L.

<DCI Enhancement>

In a case of employing Schemes 1 to 3 described above, enhancement of existing DCI may be performed. For example, at least one of options 1 to 6 below may be applied.

{Option 1}

For scheme 1, a plurality of PUSCHs may be indicated (scheduled) by a single PDCCH (DCI). To indicate the plurality of PUSCHs, an SRI field may be extended. A plurality of SRI fields in the DCI may be used to indicate a plurality of PUSCHs from a plurality of panels. For example, DCI for scheduling two PUSCHs may include two SRI fields.

Extension of an SRI field for scheme 2 may be different from extension of an SRI field for scheme 1 in the following respects.

For layers 1, 2, ..., k among the L layers, the UE may use an SRI (SRS #i) indicated first by an SRI field in DCI, for a spatial filter for UL transmission from panel 1. For remaining layers k + 1, k + 2, ..., L among the L layers, the UE may use an SRI (SRI #j) indicated second by an SRI field in the DCI, for a spatial filter for UL transmission from panel 2. k may follow a rule defined in advance or may be explicitly indicated by DCI.

To support two CWs or TBs for different TRPs, extension of an SRI field for scheme 3 may include, in addition to extension of an SRI field for scheme 2, extension of at least one of a modulation and coding scheme (MCS) field, a precoding information and number of layers field, a transmission power control (TPC) command for scheduled PUSCH field, a frequency domain resource assignment (FDRA) field, and a time domain resource assignment (TDRA) in DCI to indicate a plurality of PUSCHs. The different TRPs may have different pathlosses or may have different SINRs.

{Option 2}

The UE may be notified of or configured with information related to PUSCH repetition transmission type by higher layer signaling. For example, when the UE is not configured with repetition transmission type B (for example, PUSCH-RepTypeB) by higher layer signaling, the UE may apply repetition transmission type A. A repetition transmission type may be configured for each DCI format (or PUSCH type). Examples of the PUSCH type may include dynamic grant based PUSCH and configured grant based PUSCH.

The UE may be notified of information related to a repetition factor, information related to PUSCH allocation, information related to a spatial relation (or a precoder) to be used for PUSCH transmission, and information related to redundancy version to be used for PUSCH transmission, by DCI or a combination of DCI and a higher layer parameter.

For the information related to a repetition factor (for example, K) and the information related to PUSCH allocation (for example, a start symbol S and a PUSCH length L), a plurality of candidates may be defined in a table, and a specific candidate may be selected by DCI. In the following description, a case where the repetition factor (K) for a PUSCH is 4 is used as an example for description. However, an applicable repetition factor is not limited to 4.

For the information related to a spatial relation (also referred to as spatial relation information below), a plurality of candidates may be configured by higher layer signaling, and a plurality of spatial relation information may be activated by at least one of DCI and a MAC CE.

{Option 3}

Description will be given of the number of bits of a TPC command field included in single DCI for scheduling PUSCH transmissions over a plurality of TRPs and associations between a TPC command field and an index (for example, a closed loop index) related to TPC. The UE may control a plurality of PUSCH transmissions, based at least on the index.

The number of bits of the TPC command field included in single DCI for scheduling PUSCH transmissions over a plurality of TRPs may be extended to a certain number of bits (for example, 2M) in comparison with the number of bits in Rel. 15/16. In the present disclosure, M may denote the number of TRPs or may denote the number of SRI that can be indicated for PUSCH transmissions over a plurality of TRPs.

For example, when SRI for PUSCH transmissions to two TRPs are indicated by DCI for codebook based transmission, the TPC command field may be extended to four bits.

Association between the extended TPC command field and a specific index (for example, a closed loop index) related to TPC may follow at least one of association 1 and association 2 below. Although description will be given of a closed loop index below, closed loop index in the present disclosure may be interpreted as any specific index related to TPC.

{{Association 1}}

When the extended TPC command field is divided for every specific number of (for example, two, four, or the like) bits, the x-th (x is any integer) smallest (or largest) specific number of bits may be associated with the x-th SRI / combination of SRIs indicated by DCI.

{{Association 2}}

When the extended TPC command field is divided for every specific number of (for example, two) bits, the x-th smallest (or largest) specific number of bits may be associated with an SRI corresponding to the x-th smallest (or largest) closed loop index indicated by DCI.

{Option 4}

When PUSCH repetition transmissions over a plurality of TRPs are performed, the same number of antenna ports may be configured/indicated for different TRPs (different PUSCHs). In other words, the same number of antenna ports may be configured/indicated commonly for the plurality of TRPs (plurality of PUSCHs). Here, the UE may assume that the same number of antenna ports is configured/indicated commonly for the plurality of TRPs (plurality of PUSCHs). In this case, the UE may determine a TPMI for PUSCH transmission according to at least one of indication method 1-1 and indication method 1-2 to be described below.

{{Indication Method 1-1}}

A precoding information and number of layers field included in scheduling DCI may be constituted of the same number of bits as the number of bits defined in Rel. 15/16. In this case, one precoding information and number of layers field included in single DCI may be indicated to the UE. In other words, the UE may determine a TPMI, based on the one precoding information and number of layers field included in the single DCI. Subsequently, the UE may apply the precoding information and number of layers field / TPMI to PUSCH transmissions to different TRPs.

{{Indication Method 1-2}}

A precoding information and number of layers field included in scheduling DCI may be constituted of the number of bits extended to a certain number in comparison with that in Rel. 15/16. The specific number may be expressed by $X \times M$.

The above-described X may be determined based on the size of the precoding information and number of layers field included in the DCI for UL transmission to one TRP. For example, the above-described X may be determined based on at least one of the number of antenna ports and a number configured by a specific higher layer parameter (for example, at least one of ul-FullPowerTransmission, maxRank, codebookSubset, and transformPrecoder).

The above-described X may be a fixed value. The UE may assume that the above-described X has a fixed size irrespective of the number of antenna ports configured by a higher layer. The UE may assume that the above-described X has a fixed size irrespective of the value of a number of antenna ports field (the number of antenna ports indicated by the number of antenna ports field).

When PUSCH repetition transmissions over the plurality of TRPs are performed, different numbers or the same number of antenna ports may be configured/indicated for different TRPs (different PUSCHs). In other words, the number of antenna ports may be configured/indicated separately for each of the plurality of TRPs (plurality of PUSCHs). Here, the UE may assume that the number of antenna ports is configured/indicated independently for each of the plurality of TRPs (plurality of PUSCHs). In this case, the UE may determine a TPMI for PUSCH transmission according to indication method 2 to be described below.

{{Indication Method 2}}

A precoding information and number of layers field included in scheduling DCI may be constituted of the number of bits extended to a certain number in comparison with that in Rel. 15/16. The specific number may be expressed by $X_1 + X_2 + ... + X_M$.

The above-described $X_i$ (i is any integer from 1 to M) may be determined based on the size of the precoding information and number of layers field included in the DCI for UL transmission to the i-th TRP. For example, the above-described $X_i$ may be determined based on at least one of the number of antenna ports and a number configured by a specific higher layer parameter (for example, at least one of ul-FullPowerTransmission, maxRank, codebookSubset, and transformPrecoder). The above-described $X_i$ may be configured at a fixed value.

The above-described M may be the number of TRPs or may be the number of spatial relation information (SRI) that can be indicated for PUSCH transmissions over a plurality of TRPs.

{Option 5}

The UE may determine SRI to apply to a PUSCH, based on at least one of an SRI field in DCI for scheduling the PUSCH and a CORESET pool index for a control resource set (CORESET) for the DCI (for example, for detecting the DCI).

The UE may determine, based on a plurality of SRI fields included in DCI for scheduling a plurality of PUSCHs, SRI to be applied to each of the PUSCHs.

The UE may determine, based on one SRI field included in DCI for scheduling a plurality of PUSCHs, SRI to be applied to each of the PUSCHs.

The UE may determine transmission power for each PUSCH, based on an SRI field in DCI for scheduling the PUSCH. For example, the UE may determine a PUSCH transmission power control (TPC) related parameter, based on an SRI field in DCI for scheduling the PUSCH.

{Option 6}

The UE may determine to perform any of repetition transmission to a single TRP and repetition transmission to a plurality of TRPs, based on a specific field included in DCI.

For example, when a field included in the DCI indicates that, among a plurality of (for example, two) SRI fields (first SRI field, second SRI field), any one of the first SRI field and the second SRI field is applied, the UE may determine that repetition transmissions of a plurality of PUSCHs are performed with an applied SRI. In other words, when the field included in the DCI indicates that one SRI field among a plurality of SRI fields is applied, the UE may determine to perform PUSCH repetition transmissions in a single TRP.

For example, when a field included in the DCI indicates that, among a plurality of (for example, two) SRI fields (first SRI field, second SRI field), both the first SRI field and the second SRI field are applied, the UE may determine that repetition transmissions of a plurality of PUSCHs are performed with a plurality of SRIs (for example, a plurality of TRPs). In other words, when the field included in the DCI indicates that a plurality of SRI fields are applied, the UE may determine to perform PUSCH repetition transmissions with a plurality of TRPs.

(Issues)

Meanwhile, in Rel-15/16 NR, transmission in transport block (TB) units (TB-based transmission) and transmission in code block group (CBG) units (CBG-based transmission) are defined. Note that transmission in the present disclosure may be interpreted as retransmission and vice versa.

Note that, in the present disclosure, a CBG may be interpreted as a CB and vice versa. A TB may be interpreted as a codeword (Code Word (CW)) and vice versa.

In Rel-15/16 NR, one CW may be transmitted by using one PUSCH. In Rel-15/16 NR, one or two CWs may be transmitted by using one PDSCH.

As described above, DCI enhancement related to examples of schemes 1 to 3 and the like are studied. However, details of operation for transmitting a plurality of CWs in PUSCHs has not studied sufficiently. For example, it is not sufficiently studied how to control, when a plurality of CWs are transmitted in PUSCHs, generation, layer mapping, precoding, and the like of the CWs. Unless PUSCH transmission for the plurality of CWs is not appropriately performed, throughput may decrease, and communication quality may deteriorate.

Thus, the inventors of the present invention came up with the idea of a method for a UE to appropriately perform PUSCH transmission.

Embodiments according to the present disclosure will be described in detail with reference to the drawings as follows. The radio communication methods according to respective embodiments may each be employed individually, or may be employed in combination.

Note that in the present disclosure, "A/B" may be interpreted as "at least one of A and B."

In the present disclosure, activate, deactivate, indicate, select, configure, update, determine, notify, and the like may be interchangeably interpreted.

In the present disclosure, a CW, a TB, a beam, a panel, a UE panel, a PUSCH, a PDSCH, a TRP, a port, an SRI, an SR resource set, an SRS resource, an RS port group, a DMRS port group, an SRS port group, a resource, an RS resource group, a DMRS resource group, an SRS resource group, a beam group, a TCI state group, a spatial relation group, an SRS resource indicator (SRI) group, an antenna port group, an antenna group, a CORESET group, a CORESET pool, and terms obtained by attaching "Identifier (ID)" to these terms may be interchangeably interpreted.

In the present disclosure, a spatial relation, a spatial configuration, spatial relation information, spatialRelationInfo, an SRI, an SRS resource, a precoder, UL TCI, a TCI state, a unified TCI state (U-TCI state), a common TCI state, a joint DL/UL TCI state, QCL, QCL assumption, and the like may be interchangeably interpreted. A TCI state and TCI may be interchangeably interpreted.

A panel may be associated with at least one of a panel ID, a UL TCI state, a UL beam, a DL beam, a DL RS resource, and spatial relation information.

In the present disclosure, a sequence, a list, a set, a group, a cluster, a subset, and the like may be interchangeably interpreted.

In the present disclosure, an index, an ID, an indicator, and a resource ID may be interchangeably interpreted.

A transmission scheme and a new transmission scheme in the present disclosure may mean at least one of schemes 1 to 3 described above. At least one of schemes 1 to 3 described above may be applied to PUSCH transmission in the following embodiments. Note that application of at least one of schemes 1 to 3 described above related to PUSCH may be configured by a higher layer parameter, for example.

In the present disclosure, two CWs transmitted by using PUSCHs may be CWs having different contents or may be CWs having the same content. The PUSCHs for transmitting two CWs may be regarded as one PUSCH transmitted simultaneously or repeatedly.

DCI in the following embodiments may be limited to a specific DCI format or may correspond to a plurality of DCI formats among DCI formats for scheduling a PUSCH (for example, DCI formats 0_0. 0_1. 0_2). Note that, when the DCI corresponds to a plurality of DCI formats, common control (same control, same processing) may be performed for DCI formats, or different control may be performed for each DCI format.

In the following embodiments, a "plurality of" and "two" may be interchangeably interpreted.

The number of layers for PUSCH transmission in the following embodiments is not limited to a case of being larger than four. For example, PUSCH transmission of two CWs in the present disclosure may be performed with four or less (for example, two) layers. For schemes 1 to 3 described above, the number L of layers may be larger than four or may be four or smaller. The maximum number of layers need not be limited to four or more and may be smaller than four.

It may be assumed that PUSCH transmission in the following embodiments uses a plurality of panels, but need not be thus assumed (the PUSCH transmission may be applied irrespective of panel). In the present disclosure, transmitting/receiving a PUSCH may be interpreted as transmitting/receiving part of signals of layers/ports for the PUSCH.

(Radio Communication Method)

<First Embodiment>

A first embodiment relates to UCI on PUSCH.

In Rel-15/16 NR, when a certain condition such as a UE multiplexing UCI on PUCCH transmission overlapping PUSCH transmission in terms of time, it is supported that the UE multiplexes at least part of the UCI on a PUSCH for transmission (UCI on PUSCH). UCI on PUSCH may be referred to as multiplexing UCI on a PUSCH, transmitting UCI in a PUSCH, piggybacking UCI on a PUSCH, and the like.

In Rel-15/16 NR, how coded bits of a TB of one UL-SCH and coded bits for UCI (for example, an HARQ-ACK, CSI) are multiplexed for UCI on PUSCH is defined.

However, for future radio communication systems (for example, Rel-18 NR), study about, when a UE is scheduled with PUSCHs for transmitting two TBs, whether UCI is multiplexed on both of the respective TBs or UCI is multiplexed on only one of the TBs has not advanced yet.

Thus, the inventors of the present invention found a first embodiment.

In the first embodiment, when the UE is scheduled with PUSCHs for transmitting two TBs and the PUSCHs are used for UCI on PUSCH, this UCI may be multiplexed on both of the two TBs.

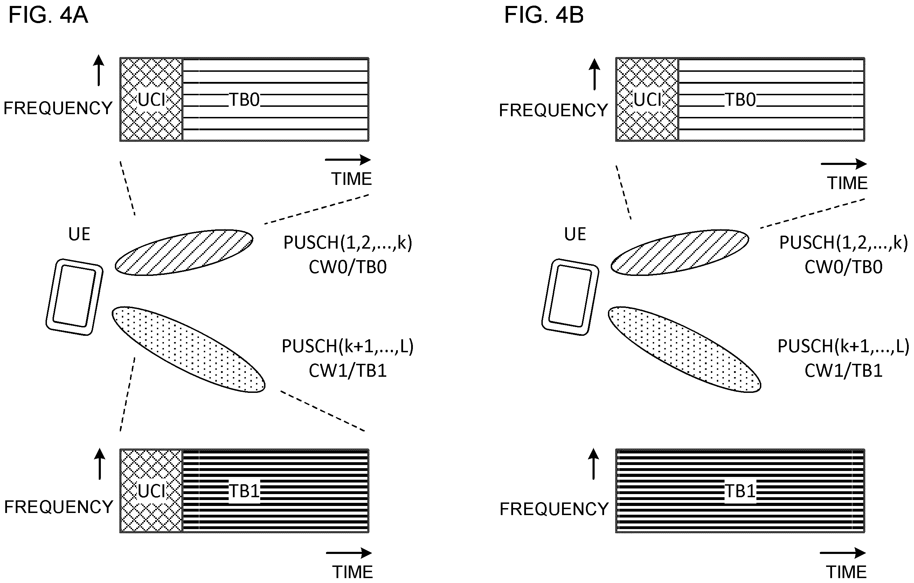

FIGS. 4A and 4B are diagrams to show examples of multiplexing of UCI and a PUSCH(s) according to the first embodiment. In this example, for two scheduled CWs (two scheduled TBs), the UE maps CW0/TB0 to k layers (PUSCHs (1, 2, ..., k)) while mapping CW1/TB1 to L - k layers (PUSCHs (k + 1, k + 2, ..., L)). FIG. 4A shows an example where UCI is multiplexed on both of the two TBs.

The UCI multiplexed on the two respective TBs may be different from each other or may be the same. For example, the UE may divide single UCI (which may be referred to as the entire UCI) into two parts (first part and second part) and multiplex the first part into a first TB (which may be referred to as TB0) while multiplexing the second part into a second TB (which may be referred to as TB1). The UE may copy single UCI to prepare first UCI and second UCI and multiplex the first UCI on the first TB while multiplexing the second UCI on the second TB (in other words, the entire UCI may be multiplexed on each of both the first TB and the second TB). The first/second part (or the first/second UCI) may include partially common pieces of information or may include completely different pieces of information.

Note that the first/second part (or the first/second UCI) may be associated with a first/second TRP. The first/second TB may be associated with the first/second TRP. The UE may then multiplex the first/second part (or the first/second UCI) on the first/second TB associated with the same TRP as that of the first/second part (or the first/second UCI).

In the first embodiment, when the UE is scheduled with PUSCHs for transmitting two TBs and these PUSCHs are used for UCI on PUSCH, this UCI may be multiplexed on only one of the TBs. FIG. 4B shows an example where UCI is multiplexed on one TB (TB0) of the two TBs.

The UE may determine this one TB to be any of the following:

- first TB (TB0),
- second TB (TB1),
- TB associated with the first TRP,
- TB associated with the second TRP, and
- TB associated with the same TRP as the TRP associated with the UCI (or PUCCH on which the UCI has been supposed to be multiplexed).

Note that which TB is used for UCI on PUSCH (for example, associations between UCI and a TB) may be defined in a specification in advance, the UE may be notified of this by a base station by using higher layer signaling (for example, an RRC parameter, a MAC CE), physical layer signaling (for example, DCI), or a combination of these, or this may be judged based on UE capability.

Associations between a TRP and a TB and associations between UCI (or a PUCCH) and a TRP may be defined in a specification in advance, the UE may be notified of the associations by a base station by using higher layer signaling (for example, an RRC parameter, a MAC CE), physical layer signaling (for example, DCI), or a combination of these, or the associations may be judged based on UE capability.

Note that, in the first embodiment, a condition to use UCI on PUSCH may be similar to or different from that in Rel-15/16/17 NR. A method of multiplexing / procedure for multiplexing coded bits for UCI for each TB (one TB) may be performed similarly to or differently from that in Rel-15/16/17 NR.

According to the first embodiment described above, the UE can appropriately carry out UCI on PUSCH even in PUSCH transmission for two TBs.

<Second Embodiment>

A second embodiment relates to layer mapping for PUSCH.

In Rel-15/16 NR, it is supported, for PUSCH, to map complex value modulation symbols (also referred to simply as modulation symbols below) corresponding to one CW to be transmitted, to up to four layers. For PDSCH, it is supported to map complex value modulation symbols corresponding to up to two CWs to be transmitted, to up to eight layers.

Concretely, layer mapping for a PUSCH/PDSCH corresponds to mapping complex value modulation symbols $d^{(q)}(0), ..., d^{(q)}(M_{symb}^{(q)} - 1)$ for a codeword q to layers $x(i) = [x^{(0)}(i) ... x^{(v-1)}(i)]^T$, $i = 0, 1, ..., M_{symb}^{layer} - 1$.

Here, $M_{symb}^{(q)}$ denotes the number of modulation symbols for the codeword q (q = 0 or 1) to be transmitted in a physical channel, $M_{symb}^{layer}$ denotes the number of modulation symbols per layer, and v may correspond to the number of layers. Note that T indicates a transposed matrix.

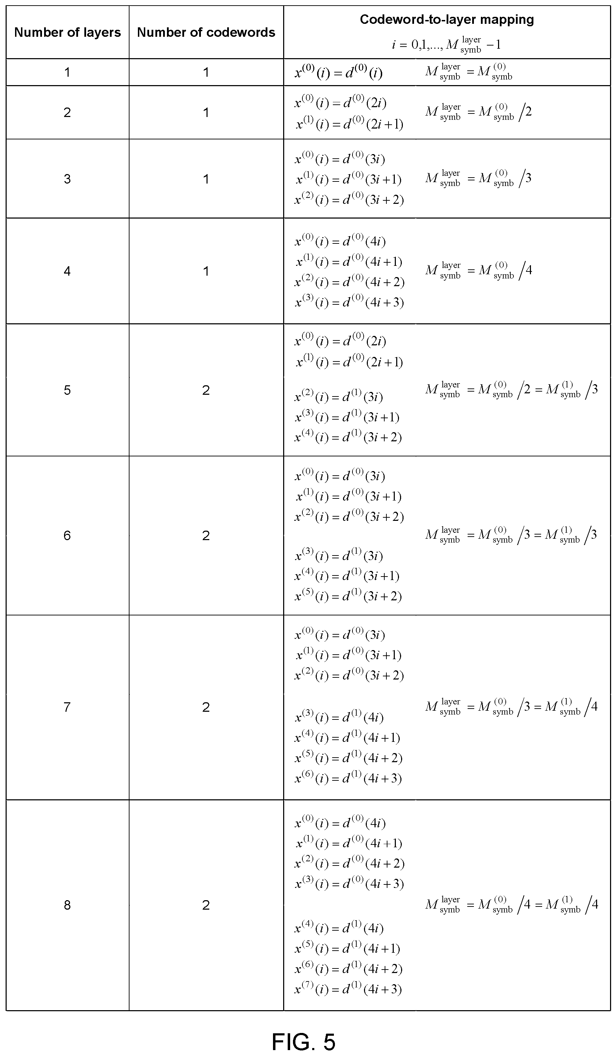

FIG. 5 shows correspondences of codeword-to-layer mapping for spatial multiplexing defined in Rel-15/16 NR. This shows that mapping from the above-described d to x varies according to the number of layers and the number of codewords. In Rel-15/16 NR, layer mapping to layers 1 to 4 (CW = 1) in FIG. 5 is supported for PUSCH, and layer mapping to layers 1 to 8 (CW = 1 or 2) in FIG. 5 is supported for PDSCH.

However, future radio communication systems (for example, Rel-18 NR), study about, when a UE is scheduled with PUSCHs for transmitting two TBs (CWs), how to layer-map these two CWs has not advanced yet.

Thus, the inventors of the present invention found the second embodiment.

In the second embodiment, a UE may use correspondences for layer mapping defined in Rel-15/16 NR shown in FIG. 5 when the UE is scheduled with PUSCHs for transmitting two TBs.

For example, when the UE is scheduled with a PUSCH(s) for transmitting one CW, layer mapping to layers 1 to 4 (CW = 1) in FIG. 5 may be applied. When the UE is scheduled with PUSCHs for transmitting two CWs, layer mapping to layers 5 to 8 (CW = 2) in FIG. 5 may be applied. In this case, the UE supports all the correspondences in FIG. 5 for PUSCH.

When the UE is scheduled with a PUSCH(s) for transmitting one CW, layer mapping to layers 1 to 4 (CW = 1) in FIG. 5 may be applied. When the UE is scheduled with PUSCHs for transmitting two CWs, layer mapping to layers 5 and 6 (CW = 2) in FIG. 5 may be applied. This is because, when the maximum number of layers for PUSCH is six, layer mapping for the number of layers of seven or larger is not applied. In this case, the UE supports part of (not all) the correspondences in FIG. 5 for PUSCH.

In the second embodiment, the UE may use correspondences (for example, a table) for new layer mapping when the UE is scheduled with PUSCHs for transmitting two TBs.

For these correspondences, only relationships with layers 5 to 8 may be defined for two CWs (it may be assumed that mapping to up to four layers is not possible / only mapping to five or more layers is possible, for transmission of two CWs), or relationships with layers 2 to 4 may be defined. Note that, when relationships with four or less layers are defined for transmission of two CWs in these correspondences, it may be assumed that relationships with five or more layers are also defined.

The UE may switch between the new correspondences and the existing correspondences in FIG. 5 for use. A condition for this switching may be defined in a specification in advance, the UE may be notified of information indicating switching by the base station by using higher layer signaling (for example, an RRC parameter, a MAC CE), physical layer signaling (for example, DCI), or a combination of these, or the condition may be judged based on UE capability.

In the present disclosure, mapping the first CW (CW0) to the number k of layers and mapping the second CW (CW1) to the number L - k of layers may be expressed as k + (L - k) layers. Note that the k + (L - k) layers may mean mapping CW0 to layers 0, ..., k - 1 and mapping CW1 to layers k, ..., L - 1. CW0 and CW1 may be reversed.

In the above-described new correspondences, when the number of CWs = 2 and the number L of layers = 5, CW-to-layer mapping may correspond to at least one of 2 + 3 layers, 3 + 2 layers, 1 + 4 layers, and 4 + 1 layers. Note that, when the number of CWs = 2 and the number L of layers = 5 in the existing table in FIG. 5, it is understood that only 2 + 3 layers are defined for the CW-to-layer mapping.

In the above-described new correspondences, when the number of CWs = 2 and the number L of layers = 6, CW-to-layer mapping may correspond to at least one of 3 + 3 layers, 2 + 4 layers, and 4 + 2 layers.

In the above-described new correspondences, when the number of CWs = 2 and the number L of layers = 7, CW-to-layer mapping may correspond to at least one of 3 + 4 layers and 4 + 3 layers.

In the above-described new correspondences, when the number of CWs = 2 and the number L of layers = 8, CW-to-layer mapping may correspond to 4 + 4 layers.

In the above-described new correspondences, when the number of CWs = 2 and the number L of layers = 2, CW-to-layer mapping may correspond to 1 + 1 layers.

In the above-described new correspondences, when the number of CWs = 2 and the number L of layers = 3, CW-to-layer mapping may correspond to at least one of 1 + 2 layers and 2 + 1 layers.

In the above-described new correspondences, when the number of CWs = 2 and the number L of layers = 4, CW-to-layer mapping may correspond to at least one of 2 + 2 layers, 1 + 3 layers, and 3 + 1 layers.

Note that CW-to-layer mapping is not limited to the above-described examples. For example, when five or more layers are permitted for one CW, CW-to-layer mapping for the number of CWs = 2 and the number L of layers may correspond to X + Y layers for any natural numbers X and Y satisfying X + Y = L.

According to the second embodiment described above, the UE can appropriately carry out CW-to-layer mapping even in PUSCH transmission for two TBs.

<Third Embodiment>

A third embodiment relates to layer mapping for PUSCH. The third embodiment may be predicated on the second embodiment.

Description will be given of a relationship between layer mapping of the above-described second embodiment and the number of layers specified by a precoding information field in DCI for scheduling a PUSCH(s).

By the precoding information field, only one number of layers may be specified. This specified number of layers may indicate the total number of layers of two CWs. The UE may judge the number of layers for a first CW and the number of layers for a second CW, based on this total number of layers. The number of layers for each of the CWs corresponding to the value of the total number of layers may be defined in a specification in advance, the UE may be notified of the number of layers by the base station by using higher layer signaling (for example, an RRC parameter, a MAC CE), physical layer signaling (for example, DCI), or a combination of these, or the number of layers may be judged based on UE capability.

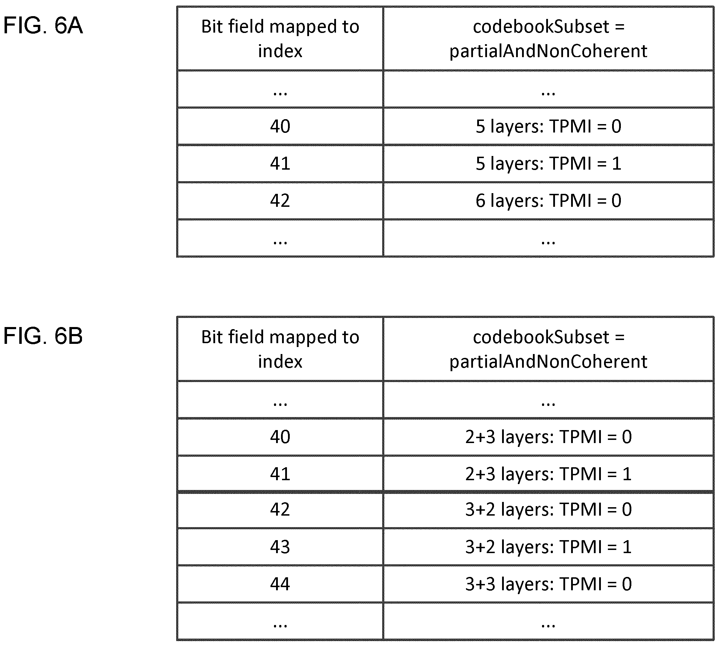

FIGS. 6A and 6B are examples of correspondences between a precoding information and number of layers field value and the number of layers and a TPMI. These correspondences are correspondences for eight antenna ports when the UE is configured with "partialAndNonCoherent," transform precoding is disabled, and the maximum rank (maxRank) is eight, for example. However, this is not restrictive. Note that it is naturally understood by those skilled in the art that "bit field mapped to index" shown in FIGS. 6A and 6B indicates a value of the precoding information and number of layers field.

In FIG. 6A, the specified number of layers may indicate the total number of layers of two CWs. For example, when the UE is specified with five layers, the UE may determine that CW-to-layer mapping corresponds to 2 + 3 layers defined in advance.

By the precoding information field, two numbers of layers may be specified. These two specified numbers of layers may indicate the respective numbers of layers of different CWs.

In FIG. 6B, the two specified numbers of layers may indicate the respective numbers of layers of CWs. For example, even when the total number of layers is five, the UE can switch between 2 + 3 layers, 3 + 2 layers, and the like, based on the precoding information field.

Note that the contents of the correspondences in FIGS. 6A and 6B may be defined in a specification in advance, the UE may be notified of the contents by the base station by using higher layer signaling (for example, an RRC parameter, a MAC CE), physical layer signaling (for example, DCI), or a combination of these, or the contents may be judged based on UE capability.

When two precoding information fields are included in DCI, one of the fields may be used to indicate the number of layers for a first CW while the other field may be used to indicate the number of layers for a first CW.

According to the third embodiment described above, the UE can appropriately carry out CW-to-layer mapping even in PUSCH transmission for two TBs.

<Fourth Embodiment>

A fourth embodiment relates to precoding for PUSCH.

In Rel-15/16 NR, precoding for a PUSCH is performed according to Equation 1 below.

$$\text{(Equation 1)} \quad [z^{(p0)}(i) \ \dots \ z^{(p\rho-1)}(i)]^T = W[y^{(0)}(i) \ \dots \ y^{(v-1)}(i)]^T$$

Here, $y^{(\lambda)}(i)$ denotes a modulation signal (modulation symbols) of layer $\lambda$ after layer mapping (or transform precoding), $z^{(p)}(i)$ denotes a modulation signal (modulation symbols) of an antenna port p, and $\rho$ denotes the number of antenna ports.

W denotes a precoding matrix, and W is a unit matrix for non-codebook based transmission. For codebook based transmission, W satisfies W = 1 in single layer transmission using a single antenna port and is determined, in other cases, according to a TPMI index acquired based on DCI for scheduling the PUSCH or a higher layer parameter.

Variables/signs for which description is omitted are as described in the second embodiment.

However, for future radio communication systems (for example, Rel-18 NR), study about, when a UE is scheduled with PUSCHs for transmitting two TBs (CWs), how to determine antenna ports, a precoding matrix, and the like in precoding as that described above has not advanced yet.

Thus, the inventors of the present invention found the fourth embodiment.

In the fourth embodiment, for a CB based PUSCH, the UE uses the same antenna port(s) as that (those) of one or more SRS ports for one or more SRS resources specified by indication of an SRI, to transmit the PUSCH. The UE uses a precoding matrix specified by a TPMI to perform precoding for the PUSCH. Note that the SRI may be given by DCI (for example, in a case of dynamic grant PUSCH) or higher layer signaling (for example, in a case of configured grant PUSCH).

The fourth embodiment is broadly divided in to Embodiments 4.1 to 4.4 below:

Embodiment 4.1: one SRS resource is specified by the SRI, and one precoding matrix is specified for PUSCH by the TPMI.
Embodiment 4.2: two SRS resources are specified by the SRI, and one precoding matrix is specified for PUSCH by the TPMI.
Embodiment 4.3: two SRS resources are specified by the SRI, and two precoding matrices are specified for PUSCH by the TPMI.
Embodiment 4.4: one SRS resource is specified by the SRI, and two precoding matrices are specified for PUSCH by the TPMI.

Note that Embodiments 4.1 and 4.2 are especially preferable in a case where the UE reports support of full coherent as UE capability information related to precoder type. Embodiments 4.3 and 4.4 are especially preferable in a case where the UE reports support of partial coherent / non-coherent as UE capability information related to precoder type.

A plurality of SRIs/TPMIs being specified may mean a plurality of SRIs/TPMIs being specified by one SRI/precoding information field or may mean separate SRIs/TPMIs being specified by two respective SRI/precoding information fields.

{Embodiment 4.1}

In Embodiment 4.1, the one specified precoding matrix may be applied for mapping between all the layers for PUSCH and all the ports for the one specified SRS resource.

In Embodiment 4.1, the SRS resource for the SRS resource set corresponding to the usage "codebook" may support up to six or eight antenna ports. In Embodiment 4.1, the precoding matrix for PUSCH (for example, W in Equation 1) may support up to six or eight antenna ports and up to six or eight layers.

Note that, in the present disclosure, an RRC parameter for an SRS resource configuration (for example, SRS-Resource) may include a parameter indicating the number of SRS ports (nrofSRS-Ports) exceeding four, may include a parameter indicating the number of combs (transmissionComb) exceeding four, or may include a parameter indicating the value of a cyclic shift index (cyclicshift) exceeding 12.

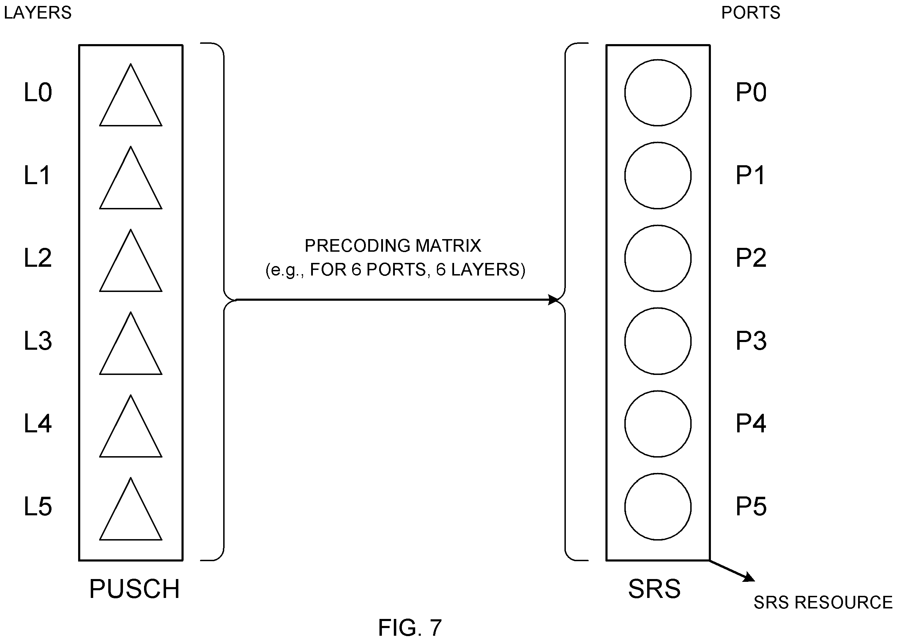

FIG. 7 is a diagram to show an example of precoding according to Embodiment 4.1. In this example, the number of layers for PUSCH is six while the number of ports for the one specified SRS resource is also six. The precoding matrix specified by a TPMI is for six ports and six layers, and the UE uses this precoding matrix to precode modulation signals of layers L0 to L5 to obtain modulation signals for ports P0 to P5.

{Embodiment 4.2}

In Embodiment 4.2, the one specified precoding matrix may be applied for mapping between all the layers for PUSCH and all the ports for two specified SRS resources.

Note that the mapping between the SRS resources and the SRS ports may be explicitly configured (for example, port numbers corresponding to the SRS resources may be configured) or may be implicitly configured. In the latter case, for example, it may be judged that, among the two specified SRS resources (first SRS resource and second SRS resource), ports #0 to #j (j is an integer) of the first SRS resource are mapped to ports P0 to Pj after the precoding, and ports #0 to #k (k is an integer) of the second SRS resource are mapped to ports Pj + 1 to Pj + k + 1 after the precoding.

Here, the i-th (i is an integer) SRS resource may be an SRS resource included in the i-th SRS resource set from the one with the lowest or highest SRS resource set ID or may be the i-th SRS resource from the one with the lowest or highest SRS resource ID in a certain SRS resource set.

In Embodiment 4.2, the SRS resource for the SRS resource set corresponding to the usage "codebook" may support up to four antenna ports. In Embodiment 4.2, the precoding matrix for PUSCH may support up to six or eight antenna ports and up to six or eight layers.

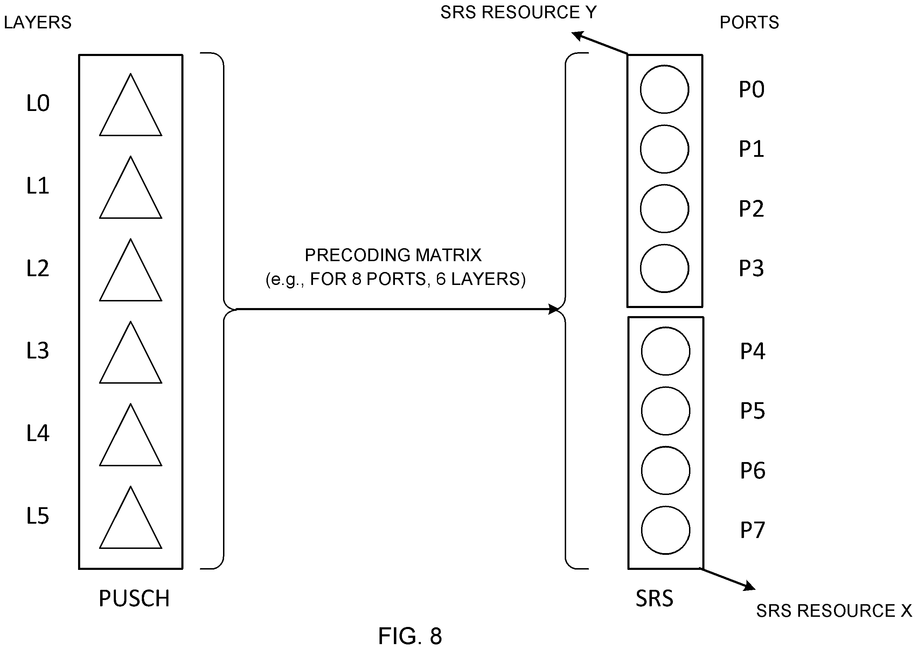

FIG. 8 is a diagram to show an example of precoding according to Embodiment 4.2. In this example, the number of layers for PUSCH is six while the total number of ports for the two specified SRS resources is eight. The precoding matrix specified by a TPMI is for eight ports and six layers, and the UE uses this precoding matrix to precode modulation signals of layers L0 to L5 to obtain modulation signals for ports P0 to P7. Here, ports P0 to P3 correspond to ports #0 to #3 of SRS resource Y, and ports P4 to P7 correspond to ports #0 to #3 of SRS resource X. In this example, SRS resource Y corresponds to the first SRS resource described above, and SRS resource X corresponds to the second SRS resource described above.

{Embodiment 4.3}

In Embodiment 4.3, a first specified precoding matrix may be applied for mapping between a first group of layers for PUSCH and all the ports for the first specified SRS resource. In Embodiment 4.3, a second specified precoding matrix may be applied for mapping between a second group of layers for PUSCH and all the ports for the second specified SRS resource.

In Embodiment 4.3, layers for PUSCH may be divided into two groups. The first/second group (which may be referred to as a layer group) may be determined based on a rule determined in advance or may be configured by layers to which the first/second CW is mapped as those described in the second/third embodiment. The first/second group may be judged (may be associated) based on a CDM group specified by an antenna port field of DCI.

Note that the mapping between the SRS resources and the SRS ports may be judged similarly to Embodiment 4.2.

In Embodiment 4.3, the SRS resource for the SRS resource set corresponding to the usage "codebook" may support up to four antenna ports. In Embodiment 4.3, the precoding matrix for PUSCH may support up to four antenna ports and up to four layers.

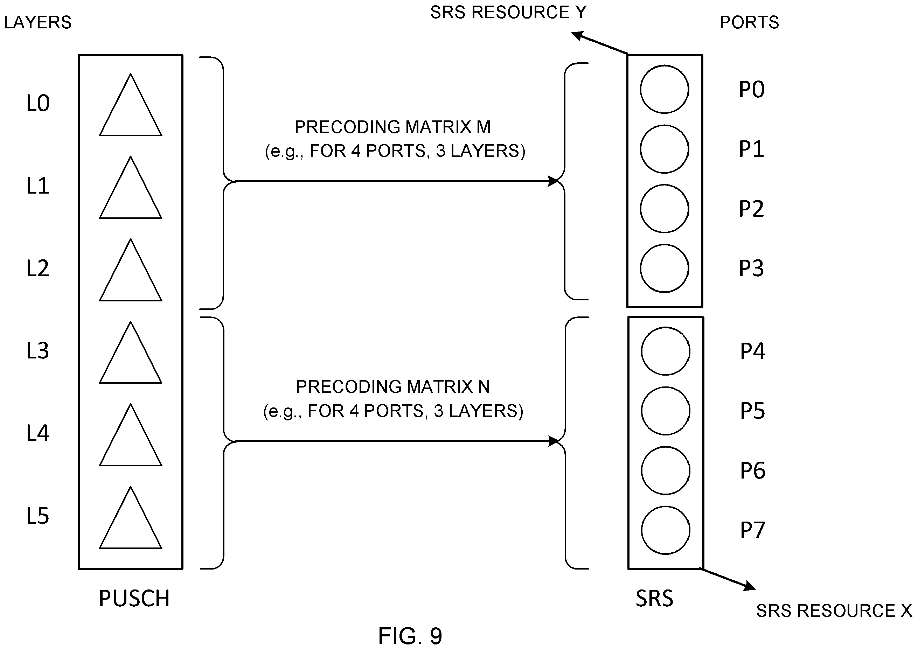

FIG. 9 is a diagram to show an example of precoding according to Embodiment 4.3. In this example, the number of layers for PUSCH is six while the total number of ports for the two specified SRS resources is eight. The two precoding matrices (denoted as precoding matrices M and N) specified by TPMIs are each for four ports and three layers, and the UE uses this precoding matrix to precode modulation signals of layers L0 to L5 to obtain modulation signals for ports P0 to P7. Here, ports P0 to P3 correspond to ports #0 to #3 of SRS resource Y, and ports P4 to P7 correspond to ports #0 to #3 of SRS resource X. In this example, SRS resource Y corresponds to the first SRS resource described above, and SRS resource X corresponds to the second SRS resource described above.

{Embodiment 4.4}

In Embodiment 4.4, a first specified precoding matrix may be applied for mapping between a first layer group for PUSCH and a first group of ports for the one specified SRS resource. In Embodiment 4.4, a second specified precoding matrix may be applied for mapping between a second layer group for PUSCH and a second group of ports for the one specified SRS resource.

In Embodiment 4.4, antenna ports after precoding may be divided into two groups. The first/second group of ports (which may be referred to as a port group) may be determined based on a rule determined in advance or may be notified explicitly. For example, configuration information of an SRS resource may include information indicating the number of ports in the first/second group.

For example, an SRS resource with six ports may include a first port group of two ports and a second port group of four ports or may include a first port group of four ports and a second port group of two ports. An SRS resource with eight ports may include a first port group of four ports and a second port group of four ports. Note that how to divide port groups is not limited to this.

In Embodiment 4.4, the SRS resource for the SRS resource set corresponding to the usage "codebook" may support up to six or eight antenna ports. In Embodiment 4.4, the precoding matrix for PUSCH may support up to four antenna ports and up to four layers.

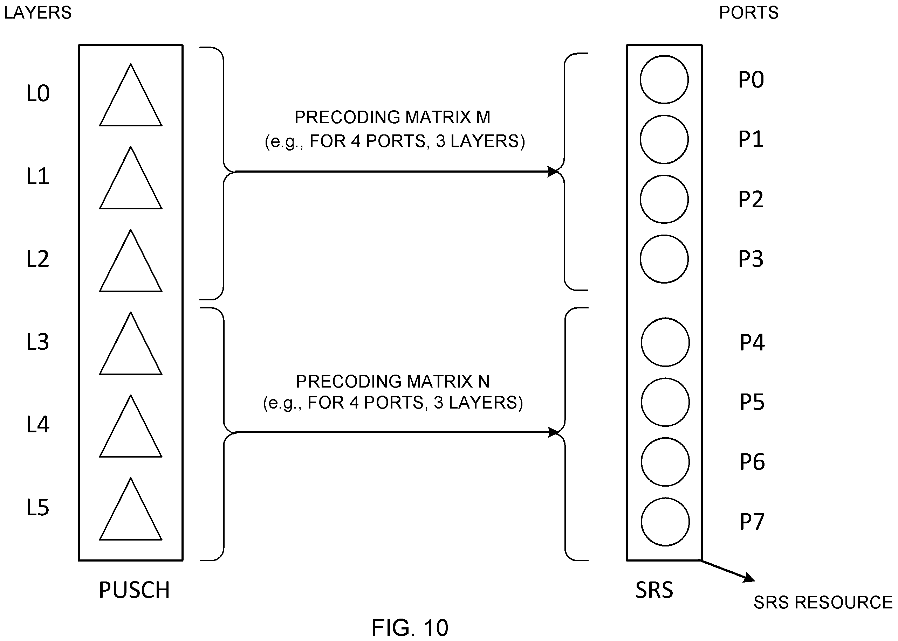

FIG. 10 is a diagram to show an example of precoding according to Embodiment 4.4. In this example, the number of layers for PUSCH is six while the number of ports for the one specified SRS resource is eight. The two precoding matrices (denoted as precoding matrices M and N) specified by TPMIs are each for four ports and three layers, and the UE uses this precoding matrix to precode modulation signals of layers L0 to L5 to obtain modulation signals for ports P0 to P7. Here, ports P0 to P3 correspond to the first port group (ports #0 to #3) of the SRS resource, and ports P4 to P7 correspond to the second port group (ports #4 to #7) of the SRS resource.

{Variations of Fourth Embodiment}

In Embodiments 4.1 to 4.4, the number of layers and the total number of ports after precoding (the total number of ports of a specified SRS resource(s)) may be the same or different from each other (for example, the number of layers > the total number of ports, the number of layers < the total number of ports).

In Embodiments 4.2 and 4.3, the number of ports for the first SRS resource and the number of ports for the second SRS resource may be the same or different from each other.

In Embodiments 4.3 and 4.4, the number of rows of the first precoding matrix and the number of rows of the second precoding matrix may be the same or different from each other. In Embodiments 4.3 and 4.4, the number of the columns of the first precoding matrix and the number of columns of the second precoding matrix may be the same or different from each other.

According to the fourth embodiment described above, the UE can apply precoding to layers to appropriately derive signals for ports even in PUSCH transmission with the number of layers exceeding four.

<Fifth Embodiment>

A fifth embodiment relates to a spatial relation(s) for an SRS resource(s). The fifth embodiment may be predicated on the fourth embodiment.

As in Embodiments 4.2 and 4.3, when two SRS resources are specified for PUSCH transmission, each of the SRS resources may be configured with one spatial relation.

As in Embodiments 4.1 and 4.4, when one SRS resource is specified for PUSCH transmission, each SRS resource may be configured with one spatial relation or may be configured with two spatial relations. Note that each of the two spatial relations may be applied to a different port group.

The UE may judge whether one or two spatial relations are applied to a PUSCH, based on whether one or two SRS resources related to the PUSCH (specified for the PUSCH) each have one or two spatial relations.

Note that when a spatial relation(s) for the PUSCH is configured/specified via a UL TCI state or a joint DL/UL TCI state, the UE may be specified with one TCI state or may be specified with two TCI states for PUSCH transmission.

Each of the two TCI states may be applied to a different port group. As in Embodiments 4.2 and 4.3, when two SRS resources are specified for PUSCH transmission, a first port group (first TCI state) may correspond to a first SRS resource while a second port group (second TCI state) may correspond to a second SRS resource. As in Embodiments 4.1 and 4.4, when one SRS resource is specified for PUSCH transmission, a first TCI state may be applied to a first port group while a second TCI state may be applied to a second port group, of the SRS resource.

According to the fifth embodiment described above, the UE can appropriately judge a spatial relation(s) for PUSCH even in PUSCH transmission with the number of layers exceeding four.

<Sixth Embodiment>

A sixth embodiment relates to precoding for PUSCH DMRS.

In Rel-15/16 NR, precoding for a PUSCH DMRS is performed according to Equation 2 below.

$$[a_{k,1(p0,\,\mu)} \cdots a_{k,\,1(p\rho-1,\,\mu)}]^T = \beta_{PUSCHDMRS}W[a\tilde{}_{k,\,1(p\sim0,\,\mu)} \cdots a\tilde{}_{k,\,1(p\sim\rho-1,\,\mu)}]^T \qquad \text{(Equation 2)}$$

Here, $a_{k,}\,l^{(p,\,\mu)}$ denotes a value (which may also referred to as a signal and the like) of a resource element (k, l) with subcarrier index k and symbol index l for the antenna port p and the subcarrier spacing configuration $\mu$. $a\tilde{}_{k,}\,l^{(p\sim,\,\mu)}$ denotes an intermediate quantity (which may also referred to as an intermediate quantity to which a sequence is mapped) of the resource element (k, l) for the antenna port p~ and the subcarrier spacing configuration $\mu$. Note that a~ and p~ are respectively intended to denote a with ~ (tilde) placed thereover and p with ~ placed thereover (should be thus denoted but are denoted as a~ and p~ for simplicity). $\beta_{PUSCH}^{DMRS}$ denotes an amplitude scaling coefficient.

Note that the antenna port p~ with tilde corresponds to a DMRS port, while the antenna port p without tilde corresponds to an SRS port / PUSCH port.

Variables/signs for which description is omitted are as described in the fourth embodiment.

However, for future radio communication systems (for example, Rel-18 NR), study about, when a UE is scheduled with PUSCHs for transmitting two TBs (CWs), how to determine antenna ports, a precoding matrix, and the like in precoding as that described above has not advanced yet.

Thus, the inventors of the present invention found the sixth embodiment.

The sixth embodiment corresponds to an embodiment obtained by interpreting some terms by using others in the fourth embodiment. "Terms before interpretation" -> "terms after interpretation" are described below:

- layer -> DMRS port,
- layers L0 to L7 -> DMRS ports p~0 to p~7, and

- (SRS) port -> SRS/PUSCH port.

Note that a DMRS port is specified by an antenna port field in DCI. In the present disclosure, more than four DMRS ports may be specified.

According to the sixth embodiment described above, the UE can apply precoding to DMRS ports to appropriately derive signals for SRS/PUSCH ports even in PUSCH transmission with the number of DMRS ports exceeding four.

<Supplements>

In some of the above-described embodiments, it is assumed that the UE is scheduled with PUSCHs for transmitting two TBs (CWs). However, each embodiment may be applied even in a case not depending on this assumption (for example, a case where one CW is scheduled by single DCI). For example, when the number of layers / number of SRS (PUSCH) ports / number of DMRS ports exceeding four is used for PUSCHs for transmitting one CW, each embodiment may be applied. Similarly, when the number of layers / number of SRS (PUSCH) ports / number of DMRS ports of four or smaller is used for PUSCHs for transmitting one CW, each embodiment may be applied.

Note that at least one of the above-described embodiments may be applied only to the UE reporting a specific UE capability or supporting the specific UE capability.

The specific UE capability may indicate at least one of the following:

- whether to support two CWs for PUSCHs scheduled by one piece of DCI (single DCI),
- whether to support UCI multiplexed on two CWs for PUSCHs scheduled by single DCI,
- whether to support UCI multiplexed on one of two CWs for PUSCHs scheduled by single DCI,
- whether to support two CWs mapped to five to six layers,
- whether to support two CWs mapped to five to eight layers,
- whether to support two CWs mapped to two to four layers,
- whether to support a PUSCH up to six layers,
- whether to support a PUSCH up to eight layers,
- whether to support up to six SRS/PUSCH ports,
- whether to support up to eight SRS/PUSCH ports,
- whether to support up to six DMRS ports,
- whether to support up to eight DMRS ports,
- whether to support a joint precoding matrix for two CWs (to be used for CW-to-layer mapping, for example, a precoding matrix as that in FIG. 8), and
- whether to support separate precoding matrices for two CWs (to be used for CW-to-layer mapping, for example, two precoding matrices as those in FIG. 9).

The specific UE capability may be capability applied to all frequencies (commonly irrespective of frequency), capability for each frequency (for example, cell, band, BWP), capability for each frequency range (for example, FR1, FR2, FR3, FR4, FR5), or capability for each subcarrier spacing.

The specific UE capability may be capability applied to all duplex schemes (commonly irrespective of duplex scheme), or capability for each duplex scheme (for example, time division duplex (TDD), frequency division duplex (FDD)).

At least one of the above-described embodiments may be applied to a case where the UE is configured with specific information related to the above-described embodiments by higher layer signaling (in a case with no configuration, operation in Rel. 15/16 is applied, for example). For example, the specific information may be information indicating enabling of two CWs for a PUSCH, information indicating enabling of UCI multiplexing on two CWs, information indicating enabling of UCI multiplexing on one of two CWs, information indicating use of a new layer mapping table, any RRC parameter for a specific release (for example, Rel. 18), or the like.

Note that, in the present disclosure, use of (referring to) a table need not mean including the table itself but may mean deriving/outputting/processing contents indicated in the table by using a function, a list, a condition, or the like.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

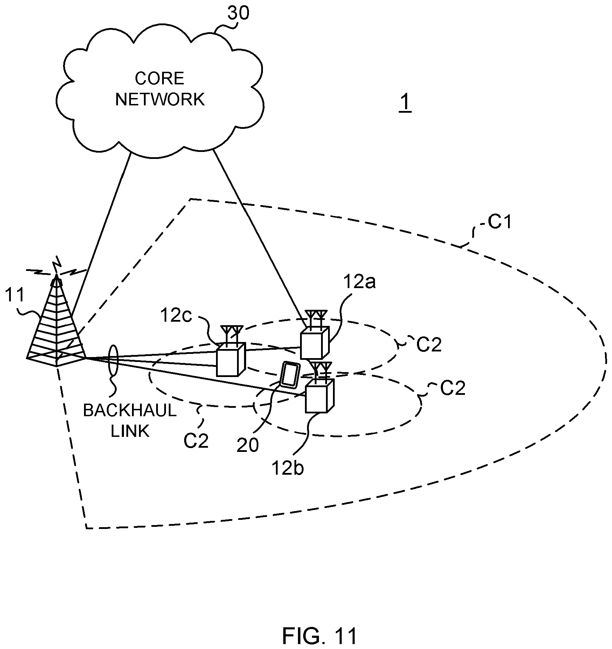

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multicarrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

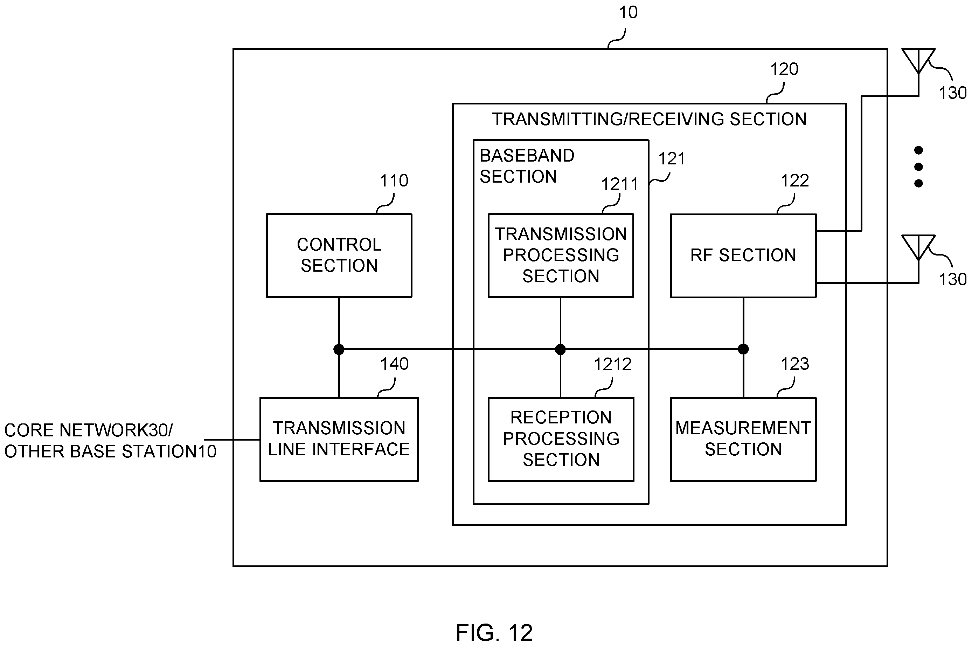

FIG. 12 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit, to the user terminal 20, information indicating that a plurality of transport blocks (TBs) / codewords (CWs) are scheduled by single downlink control information (DCI) for a physical uplink shared channel (PUSCH) (for example, a higher layer parameter indicating a fixed number or the maximum number of CWs to be scheduled, configuration information, or the like).

The transmitting/receiving section 120 may receive, when the physical uplink shared channel overlaps a physical uplink control channel (PUCCH) for transmitting uplink control information (UCI), the physical uplink shared channel including at least one of the plurality of transport blocks on which the uplink control information is to be multiplexed, from the user terminal 20.

The transmitting/receiving section 120 may receive, from the user terminal 20, the physical uplink shared channel including a signal for the plurality of codewords to be mapped into a layer corresponding to the number of layers indicated by a precoding and number of layers field of the downlink control information.

The transmitting/receiving section 120 may transmit, to the user terminal 20, information related to a reference signal for measurement (Sounding Reference Signal (SRS)) resource indicator (SRS Resource Indicator (SRI)) for transmission of the physical uplink shared channel (PUSCH) (for example, an SRI field) and information related to a transmitted precoding matrix indicator (TPMI) for the transmission of the physical uplink shared channel (for example, a precoding and number of layers field).

The transmitting/receiving section 120 may receive, when at least one of the number of SRS resources specified by using the SRI and the number of precoding matrices specified by the TPMI is two or more, the physical uplink shared channel including a signal to be mapped based on mapping determined between a layer for transmission of the physical uplink shared channel and a port of a specified one of the SRS resources, from the user terminal 20.

(User Terminal)

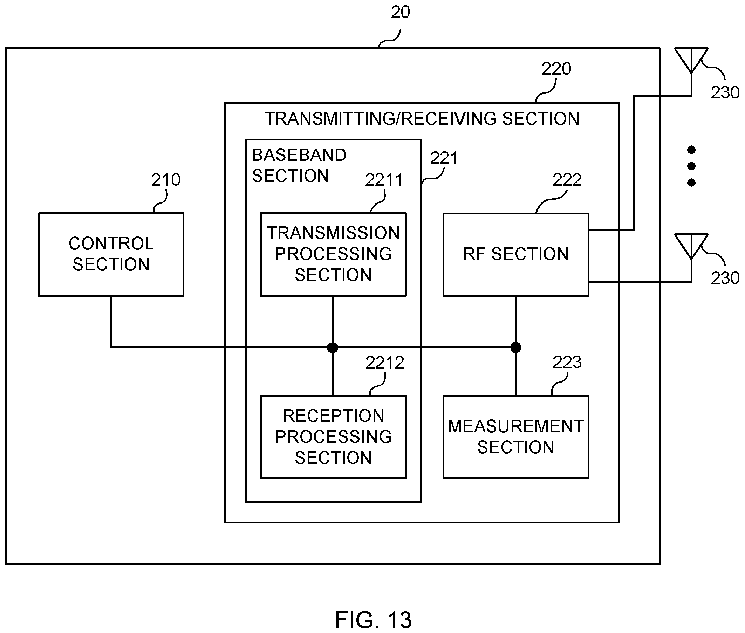

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information indicating that a plurality of codewords (CWs) including a first codeword and a second codeword are scheduled by single downlink control information (DCI) for a physical uplink shared channel (PUSCH) (for example, a higher layer parameter indicating a fixed number or the maximum number of CWs to be scheduled, configuration information, or the like).

The control section 210 may control transmission of the physical uplink shared channel for the plurality of codewords, based on the information.

The control section 210 may perform, when the physical uplink shared channel overlaps a physical uplink control channel (PUCCH) for transmitting uplink control information (UCI), control to multiplex the uplink control information on at least one of the plurality of transport blocks.

The control section 210 may perform control to multiplex entire of the uplink control information on both of the plurality of transport blocks.

The control section 210 may perform control to divide entire of the uplink control information into a first part and a second part and multiplex the first part into a first transport block of the plurality of transport blocks while multiplexing the second part on a second transport block of the plurality of transport blocks.

The control section 210 may perform control to multiplex entire of the uplink control information on only one of the plurality of transport blocks.

The control section 210 may perform control to map the plurality of codewords into a layer corresponding to the number of layers indicated by a precoding and number of layers field of the downlink control information.

The control section 210 may judge that the number of layers indicated by the field is a total number of layers for the plurality of codewords and map the first codeword to a layer corresponding to the number of layers for the first codeword corresponding to the total number of layers while mapping the second codeword to a layer corresponding to the number of layers for the second codeword corresponding to the total number of layers.

The control section 210 may judge that the number of layers indicated by the field indicates the number of layers for the first codeword and the number of layers for the second codeword and map the first codeword to a layer corresponding to the number of layers for the first codeword while mapping the second codeword to a layer corresponding to the number of layers for the second codeword.

The control section 210 may map the plurality of codewords into a layer corresponding to the number of layers indicated by the field, based on a mapping table only indicating that the plurality of codewords are mapped to five or more layers (for example, correspondences of new layer mapping described above).

The control section 210 may determine, when at least one of the number of SRS resources specified by using a reference signal for measurement (Sounding Reference Signal (SRS)) resource indicator (SRS Resource Indicator (SRI)) for transmission of a physical uplink shared channel and the number of precoding matrices specified by using a transmitted precoding matrix indicator (TPMI) for the transmission of the physical uplink shared channel is two or more, mapping between a layer for the transmission of the physical uplink shared channel and a port of a specified one of the SRS resources.

The transmitting/receiving section 220 may transmit the physical uplink shared channel.

When the number of precoding matrices is one and the number of SRS resources is two, the control section 210 may apply one specified precoding matrix to mapping between all the layers and all ports of two specified SRS resources.

When the number of precoding matrices is two and the number of SRS resources is two, the control section 210 may apply a first specified precoding matrix to mapping between a first group of the layers and all ports of a first specified SRS resource and applies a second specified precoding matrix to mapping between a second group of the layers and all ports of a second specified SRS resource.

When the number of precoding matrices is two and the number of SRS resources is one, the control section 210 may apply a first specified precoding matrix to mapping between a first group of the layers and a first group of ports of a specified SRS resource and applies a second specified precoding matrix to mapping between a second group of the layers and a second group of ports of a second specified SRS resource.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

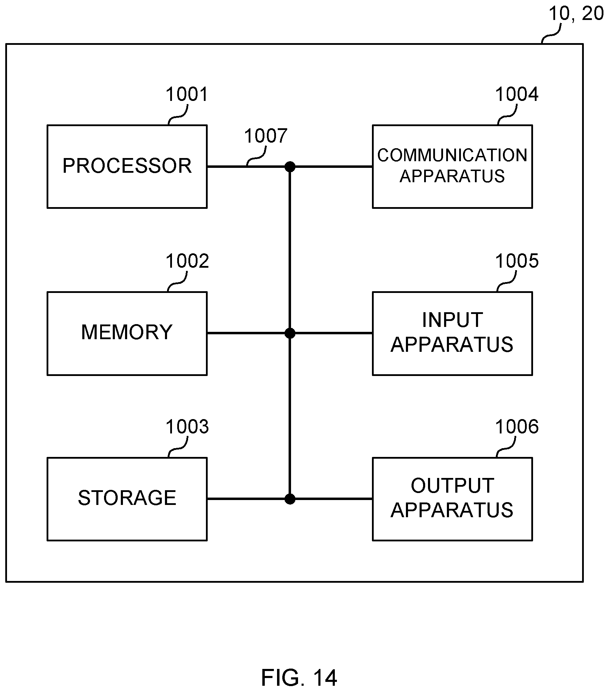

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Bluray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to -13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs) .

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a receiving section that receives information indicating that a plurality of transport blocks are scheduled for a physical uplink shared channel by single downlink control information; and
   a control section that performs, when the physical uplink shared channel overlaps a physical uplink control channel for transmitting uplink control information, control to multiplex the uplink control information on at least one of the plurality of transport blocks.

2. The terminal according to claim 1, wherein
   the control section performs control to multiplex entire of the uplink control information on both of the plurality of transport blocks.

3. The terminal according to claim 1, wherein
   the control section performs control to divide entire of the uplink control information on a first part and a second part and multiplex the first part on a first transport block of the plurality of transport blocks while multiplexing the second part on a second transport block of the plurality of transport blocks.

4. The terminal according to claim 1, wherein
   the control section performs control to multiplex entire of the uplink control information on only one of the plurality of transport blocks.

5. A radio communication method for a terminal, comprising:

   receiving information indicating that a plurality of transport blocks are scheduled for a physical uplink shared channel by single downlink control information; and
   performing, when the physical uplink shared channel overlaps a physical uplink control channel for transmitting uplink control information, control to multiplex the uplink control information on at least one of the plurality of transport blocks.

6. A base station comprising:

   a transmitting section that transmits information indicating that a plurality of transport blocks are scheduled for a physical uplink shared channel by single downlink control information; and
   a receiving section that receives, when the physical uplink shared channel overlaps a physical uplink control channel for transmitting uplink control information, the physical uplink shared channel including at least one of the plurality of transport blocks on which the uplink control information is to be multiplexed.

| TPMI INDEX | PRECODING MATRIX W (ORDERED FROM LEFT TO RIGHT IN ASCENDING ORDER OF TPMI INDEX) | | | | | | | |
|---|---|---|---|---|---|---|---|---|
| 0 – 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 – 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16 – 23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24 – 27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

NON-COHERENT CODEBOOK

PARTIAL COHERENT CODEBOOK

FULLY COHERENT CODEBOOK

FIG. 1

EP 4 376 521 A1

FIG. 2A

UE

PANEL #1

PUSCH

PANEL #2

1 TRP

FIG. 2B

UE

PANEL #1

PUSCH

PUSCH#1

PUSCH#2

PANEL #2

1 TRP

FIG. 2C

UE

PANEL #1

PUSCH

PUSCH#1

PUSCH#2

PANEL #2

2 TRP

ideal
backhaul

FIG. 3A

UE      1 CW/TB

PANEL #1      1 TRP

PUSCH(1,2,...,L)

COHERENT     PUSCH(1,2,...,L)

PANEL #2

PUSCH(1,2,...,L)

FIG. 3B

UE      1 CW/TB

PANEL #1      2 TRP

PUSCH(1,2,...,L)

NON-COHERENT     PUSCH(1,2,...,k)

PANEL #2

PUSCH(k+1,...,L)

ideal
backhaul

FIG. 3C

UE      2 CW/TB

PANEL #1      2 TRP

PUSCH(1,2,...,L)

NON-COHERENT     PUSCH(1,2,...,k)
CW/TB#1

PANEL #2

PUSCH(k+1,...,L)
CW/TB#2

ideal
backhaul

FIG. 4A

FIG. 4B

| Number of layers | Number of codewords | Codeword-to-layer mapping $i = 0,1,...,M_{symb}^{layer} - 1$ |
|---|---|---|
| 1 | 1 | $x^{(0)}(i) = d^{(0)}(i)$  $\quad M_{symb}^{layer} = M_{symb}^{(0)}$ |
| 2 | 1 | $x^{(0)}(i) = d^{(0)}(2i)$  $x^{(1)}(i) = d^{(0)}(2i+1)$  $\quad M_{symb}^{layer} = M_{symb}^{(0)}/2$ |
| 3 | 1 | $x^{(0)}(i) = d^{(0)}(3i)$  $x^{(1)}(i) = d^{(0)}(3i+1)$  $\quad M_{symb}^{layer} = M_{symb}^{(0)}/3$  $x^{(2)}(i) = d^{(0)}(3i+2)$ |
| 4 | 1 | $x^{(0)}(i) = d^{(0)}(4i)$  $x^{(1)}(i) = d^{(0)}(4i+1)$  $x^{(2)}(i) = d^{(0)}(4i+2)$  $\quad M_{symb}^{layer} = M_{symb}^{(0)}/4$  $x^{(3)}(i) = d^{(0)}(4i+3)$ |
| 5 | 2 | $x^{(0)}(i) = d^{(0)}(2i)$  $x^{(1)}(i) = d^{(0)}(2i+1)$  $x^{(2)}(i) = d^{(1)}(3i)$  $\quad M_{symb}^{layer} = M_{symb}^{(0)}/2 = M_{symb}^{(1)}/3$  $x^{(3)}(i) = d^{(1)}(3i+1)$  $x^{(4)}(i) = d^{(1)}(3i+2)$ |
| 6 | 2 | $x^{(0)}(i) = d^{(0)}(3i)$  $x^{(1)}(i) = d^{(0)}(3i+1)$  $x^{(2)}(i) = d^{(0)}(3i+2)$  $x^{(3)}(i) = d^{(1)}(3i)$  $\quad M_{symb}^{layer} = M_{symb}^{(0)}/3 = M_{symb}^{(1)}/3$  $x^{(4)}(i) = d^{(1)}(3i+1)$  $x^{(5)}(i) = d^{(1)}(3i+2)$ |
| 7 | 2 | $x^{(0)}(i) = d^{(0)}(3i)$  $x^{(1)}(i) = d^{(0)}(3i+1)$  $x^{(2)}(i) = d^{(0)}(3i+2)$  $x^{(3)}(i) = d^{(1)}(4i)$  $\quad M_{symb}^{layer} = M_{symb}^{(0)}/3 = M_{symb}^{(1)}/4$  $x^{(4)}(i) = d^{(1)}(4i+1)$  $x^{(5)}(i) = d^{(1)}(4i+2)$  $x^{(6)}(i) = d^{(1)}(4i+3)$ |
| 8 | 2 | $x^{(0)}(i) = d^{(0)}(4i)$  $x^{(1)}(i) = d^{(0)}(4i+1)$  $x^{(2)}(i) = d^{(0)}(4i+2)$  $x^{(3)}(i) = d^{(0)}(4i+3)$  $x^{(4)}(i) = d^{(1)}(4i)$  $\quad M_{symb}^{layer} = M_{symb}^{(0)}/4 = M_{symb}^{(1)}/4$  $x^{(5)}(i) = d^{(1)}(4i+1)$  $x^{(6)}(i) = d^{(1)}(4i+2)$  $x^{(7)}(i) = d^{(1)}(4i+3)$ |

FIG. 5

FIG. 6A

| Bit field mapped to index | codebookSubset = partialAndNonCoherent |
|---|---|
| ... | ... |
| 40 | 5 layers: TPMI = 0 |
| 41 | 5 layers: TPMI = 1 |
| 42 | 6 layers: TPMI = 0 |
| ... | ... |

FIG. 6B

| Bit field mapped to index | codebookSubset = partialAndNonCoherent |
|---|---|
| ... | ... |
| 40 | 2+3 layers: TPMI = 0 |
| 41 | 2+3 layers: TPMI = 1 |
| 42 | 3+2 layers: TPMI = 0 |
| 43 | 3+2 layers: TPMI = 1 |
| 44 | 3+3 layers: TPMI = 0 |
| ... | ... |

LAYERS

PORTS

L0

L1

L2

L3

L4

L5

PUSCH

P0

P1

P2

P3

P4

P5

SRS

PRECODING MATRIX
(e.g., FOR 6 PORTS, 6 LAYERS)

SRS RESOURCE

FIG. 7

FIG. 8

PORTS

P0
P1
P2
P3

P4
P5
P6
P7

SRS RESOURCE X

SRS

SRS RESOURCE Y

PRECODING MATRIX M
(e.g., FOR 4 PORTS, 3 LAYERS)

PRECODING MATRIX N
(e.g., FOR 4 PORTS, 3 LAYERS)

FIG. 9

PUSCH

LAYERS

L0
L1
L2
L3
L4
L5

LAYERS

PORTS

EP 4 376 521 A1

L0 △

L1 △

PRECODING MATRIX M
(e.g., FOR 4 PORTS, 3 LAYERS)

L2 △

L3 △

PRECODING MATRIX N
(e.g., FOR 4 PORTS, 3 LAYERS)

L4 △

L5 △

PUSCH

P0 ○

P1 ○

P2 ○

P3 ○

P4 ○

P5 ○

P6 ○

P7 ○

SRS

SRS RESOURCE

FIG. 10

30

CORE
NETWORK

1

C1

11

12a

12c

C2

C2

BACKHAUL
LINK

C2

20

12b

FIG. 11

FIG. 12

FIG. 13

EP 4 376 521 A1

FIG. 14

## INTERNATIONAL SEARCH REPORT

International application No.

**PCT/JP2021/027341**

### A. CLASSIFICATION OF SUBJECT MATTER

*H04W 72/04*(2009.01)i
FI: H04W72/04 136; H04W72/04 137

According to International Patent Classification (IPC) or to both national classification and IPC

### B. FIELDS SEARCHED

Minimum documentation searched (classification system followed by classification symbols)

H04B7/24-7/26, H04W4/00-99/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | TCL. Enhancements for unlicensed band URLLC/IIoT. 3GPP TSG RAN WG1 #102-e R1-2005768. 07 August 2020 sections 2.1, 4 | 1-6 |
| Y | APPLE INC. Discussions on PUSCH skipping in Rel-16. 3GPP TSG RAN WG1 #104b-e R1-2103078. 07 April 2021 sections 2.4, 5.1 | 1-6 |
| Y | HUAWEI, HISILICON. Discussion on UCI feedback for URLLC. 3GPP TSG RAN WG1 adhoc_NR_AH_1801 R1-1800054. 13 January 2018 section 2.2 | 3 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 December 2021** | **14 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

# EP 4 376 521 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010